# EUROPÄISCHE PATENTSCHRIFT

(11) **EP 3 057 826 B1**
(45) Veröffentlichungstag und Bekanntmachung des Hinweises auf die Patenterteilung: **11.12.2019**
(21) Anmeldenummer: 14781241.6
(22) Anmeldetag: 08.10.2014
(51) Int. Cl.: B60N 2/22

(54) **FAHRZEUGSITZ, INSBESONDERE KRAFTFAHRZEUGSITZ**
VEHICLE SEAT, PARTICULARLY AUTOMOTIVE VEHICLE SEAT
SIÈGE DE VÉHICULE, NOTAMMENT SIÈGE DE VÉHICULE AUTOMOBILE

(30) Priorität: 14.10.2013 DE 102013220659
(43) Veröffentlichungstag der Anmeldung: 24.08.2016
(73) Patentinhaber: Adient Luxembourg Holding S.à r.l., 1855 Luxembourg (LU)
(72) Erfinder: PASTOORS, Alfred, 50823 Koeln (DE); WETZIG, Stefan, 58256 Ennepetal (DE)
(74) Vertreter: Liedhegener, Ralf
(86) Internationale Anmeldenummer: PCT/EP2014/071542
(87) Internationale Veröffentlichungsnummer: WO 2015/055478

(56) Entgegenhaltungen:
- EP-A1- 0 068 960
- DE-A1-102010 035 377

## Beschreibung

Die Erfindung betrifft einen Fahrzeugsitz, insbesondere einen Kraftfahrzeugsitz, mit einem Sitzteil und einer Lehne, welche mittels wenigstens eines Beschlags, welcher ein erstes Beschlagteil und ein relativ zu dem ersten Beschlagteil um eine Achse drehbares zweites Beschlagteil umfasst, mit dem Sitzteil verbunden und relativ zum diesem um die Achse schwenkbar ist, einem ersten Adapter, der das erste Beschlagteil fest mit einer Struktur der Lehne oder einer Struktur des Sitzteils verbindet, und einem zweiten Adapter, der das zweite Beschlagteil fest mit der anderen der beiden Strukturen des Sitzteils und der Lehne verbindet, wobei wenigstens ein erster Anschlag an dem ersten Adapter und wenigstens ein zweiter Anschlag an dem zweiten Adapter vorgesehen ist, und der erste Anschlag durch Zusammenwirken mit dem zweiten Anschlag den Schwenkwinkel der Lehne bei entriegeltem Beschlag beschränkt und der zweite Anschlag einstückig mit dem zweiten Adapter ausgebildet ist und der zweite Anschlag aus einer Randumstellung des zweiten Adapters herausgestellt ist, wobei der zweite Anschlag einen ersten Schenkel aufweist, der ausgehend von der Randumstellung in radialer Richtung zur Achse hin orientiert verläuft.

### Stand der Technik

Bei einem aus der EP 1 859 706 A1 bekannten Fahrzeugsitz ist am Sitzteil und an der Lehne jeweils ein Anschlag angeschweißt. Wenn die Lehne nach hinten geschwenkt wird, kommen die beiden Anschläge in Anlage aneinander, begrenzen den Schwenkwinkel und stützen dadurch die Lehne nach hinten ab.

Die DE 20 2009 015 235 U1 offenbart einen Fahrzeugsitz mit einer relativ zu einem Sitzteil schwenkbaren Lehne. Ein dem Sitzteil zugeordneter Anschlag wirkt in jeder Schwenkrichtung mit jeweils einem von zwei der Lehne zugeordneten Anschlägen zusammen und begrenzt dadurch den Schwenkwinkel der Lehne. Der dem Sitzteil zugeordnete Anschlag ist aus einem Adapter ausgestellt. Der Adapter umfasst einen weitgehend senkrecht zur Schwenkachse der Lehne verlaufenden Grundkörper, aus dem der Anschlag in axialer Richtung ausgestellt ist.

Aus der DE 11 2010 004 681 T5 ist ein Beschlag für einen Fahrzeugsitz bekannt, der ein erstes Beschlagteil und ein relativ zu dem ersten Beschlagteil um eine Schwenkachse drehbares zweites Beschlagteil umfasst. Das erste Beschlagteil ist mit einem ersten Adapter verbunden und das zweite Beschlagteil ist mit einem zweiten Adapter verbunden. Der zweite Adapter weist eine Randumstellung auf, die stellenweise gekrümmt um die Schwenkachse verläuft und durch einen Freischnitt in zwei Abschnitte unterbrochen ist. Eine parallel zur Schwenkachse verlaufende Stirnfläche eines Abschnitts der Randumstellung dient als Anschlag für einen mittelbar mit dem ersten Beschlagteil verbundenen Bolzen. Die Breite der Anschlagfläche entspricht der Materialstärke des zweiten Adapters. Die Größe der Anschlagfläche ist durch die Materialstärke begrenzt.

Die DE 10 2012 009 159 A1 offenbart eine Beschlaganordnung für einen Fahrzeugsitz, die drei Beschlagteile umfasst. Ein zweites Beschlagteil weist eine Randumstellung auf, von deren Ende ein Anschlag nach außen abgewinkelt ist, der als Steuerelement für eine Verriegelungsvorrichtung dient.

Aus der DE 10 2008 063 359 A1 ist ein Beschlag für einen Fahrzeugsitz bekannt, der eine Lehne und eine Sitzteil aufweist, mit einem sitzteilfesten ersten Beschlagteil, einem zweiten Beschlagteil, welches für die Neigungseinstellung der Lehne des Fahrzeugsitzes zwischen mehreren Gebrauchsstellungen relativ zum ersten Beschlagteil verdrehbar ist, und einem lehnenfesten dritten Beschlagteil, welches mit einem mit dem zweiten Beschlagteil fest verbundenen Rastelement verriegelbar und für ein Freischwenken der Lehne relativ zu dem zweiten Beschlagteil um eine Achse schwenkbar ist, wobei die Schwenkbewegung des dritten Beschlagteils aus der Gebrauchsstellung in die freigeschwenkte Stellung durch einen Sperranschlag begrenzt ist. Der Sperranschlag steht parallel zur Achse vom Adapter ab. Die Breite der Anschlagfläche entspricht der Materialstärke des zweiten Anschlags. Die Größe der Anschlagfläche ist durch die Materialstärke des Anschlags begrenzt.

Die WO 2012/123084 A1 offenbart ein Verstellmittel für einen Fahrzeugsitz mit einem Sitzteil und einer Rückenlehne zur Einstellung des Neigungswinkels der Rückenlehne relativ zu dem Sitzteil. Das Verstellmittel weist einen Sitzteilbeschlag auf, der mit dem Sitzteil verbunden ist und einen Lehnenbeschlag, der mit der Rückenlehne verbunden ist. Die Beschläge umfassen Anschläge, die den Verstellbereich der Rückenlehne relativ zu dem Sitzteil begrenzen, wobei der Verstellbereich einstellbar vorgesehen ist. Dazu sind die Anschläge an den Beschlag angeschraubt.

Aus der DE 10 2010 035 377 A1 ist ein Beschlag für einen Fahrzeugsitz bekannt, mit einem ersten Beschlagteil und einem zweiten Beschlagteil, welche relativ zueinander verdrehbar sind, einem Umklammerungsring, welcher zum axialen Zusammenhalt der beiden Beschlagteile mittels eines äußeren Ringabschnitts am ersten Beschlagteil befestigt ist und mittels eines inneren Ringabschnitts das zweite Beschlagteil übergreift, und Anschlägen, welche der Begrenzung der relativen Drehung der beiden Beschlagteile dienen und welche wenigstens einen am Umklammerungsring ausgebildeten Begrenzungsanschlag und wenigstens einen dem zweiten Beschlagteil zugeordneten Sperranschlag umfassen, wobei der Begrenzungsanschlag vom äußeren Ringabschnitt des Umklammerungsrings nach außen absteht, und der Sperranschlag an einem mit dem zweiten Beschlagteil verbundenen Strukturteil vorgesehen ist.

Aus der EP 0 068 960 A1 ist ein Beschlag bekannt, welcher ein erstes Beschlagteil und ein relativ zu dem ersten Beschlagteil um eine Achse drehbares zweites Beschlagteil umfasst, einem ersten Adapter, der das erste Beschlagteil fest mit einer Struktur einer Lehne oder einer Struktur eines Sitzteils verbindet, und einem zweiten Adapter, der das zweite Beschlagteil fest mit der anderen der beiden Strukturen des Sitzteils und der Lehne verbindet. Eine erste Lasche ist aus dem ersten Adapter derart herausgebogen ist, dass die erste Lasche das zweite Beschlagteil umgreift und axial sichert. Eine zweite Lasche ist aus dem zweiten Adapter derart herausgebogen, dass die zweite Lasche das erste Beschlagteil umgreift und axial sichert.

### Aufgabe

Der Erfindung liegt die Aufgabe zu Grunde, einen Fahrzeugsitz der eingangs genannten Art zu verbessern, insbesondere die Festigkeit der Anschläge zu erhöhen, damit diese nicht durch Missbrauchskräfte deformiert werden können. Insbesondere soll ein Kontaktbereich, in dem sich die Anschlagflächen berühren können, vergrößert werden.

### Lösung

Diese Aufgabe wird erfindungsgemäß durch einen Fahrzeugsitz, insbesondere einen Kraftfahrzeugsitz, gelöst, mit einem Sitzteil und einer Lehne, welche mittels wenigstens eines Beschlags, welcher ein erstes Beschlagteil und ein relativ zu dem ersten Beschlagteil um eine Achse drehbares zweites Beschlagteil umfasst, mit dem Sitzteil verbunden und relativ zu dem Sitzteil um die Achse schwenkbar ist,
einem ersten Adapter, der das erste Beschlagteil fest mit einer Struktur der Lehne oder einer Struktur des Sitzteils verbindet,
einem zweiten Adapter, der das zweite Beschlagteil fest mit der anderen der beiden Strukturen des Sitzteils und der Lehne verbindet,
wenigstens einem ersten Anschlag an dem ersten Adapter und wenigstens einem zweiten Anschlag an dem zweiten Adapter, wobei der erste Anschlag durch Zusammenwirken mit dem zweiten Anschlag den Schwenkwinkel der Lehne beschränkt. Der zweite Anschlag ist einstückig mit dem zweiten Adapter ausgebildet und aus einer Randumstellung des zweiten Adapters herausgestellt, wobei der zweite Anschlag einen ersten Schenkel aufweist, der ausgehend von der Randumstellung in radialer Richtung zur Achse hin orientiert verläuft und wobei der zweite Anschlag einen zweiten Schenkel aufweist, der den ersten Schenkel stabilisiert.

Dadurch, dass der zweite Anschlag einen ersten Schenkel aufweist, der ausgehend von der Randumstellung in radialer Richtung zur Achse hin orientiert verläuft, und wobei der zweite Anschlag einen zweiten Schenkel aufweist, der den ersten Schenkel stabilisiert, ist der zweite Anschlag in einer sehr biegesteifen Zone des Adapters gebildet. Im Vergleich zu einer Anordnung des zweiten Anschlags inmitten des Grundkörpers des Adapters neigt das den zweiten Anschlag umgebende Material im Bereich der Randumstellung weniger zum Ausbeulen. Es können somit höhere Anschlagskräfte von dem zweiten Anschlag aufgenommen werden, ohne dass es zu plastischen Deformationen des zweiten Adapters kommt. Zudem ist ein Kontaktbereich, in dem sich Anschlagflächen des ersten und des zweiten Anschlags berühren können, nicht durch die Blechstärke des zweiten Anschlags beschränkt.

Die Randumstellung stellt eine wesentliche Stellgröße zur Auslegung der Steifigkeit der gesamten Sitzstruktur dar. Durch den zweiten Anschlag kann die Steifigkeit der gesamten Sitzstruktur beeinflusst werden, so dass der zweite Anschlag selbst eine wirkungsvolle Stellgröße für das Kräftemanagement der Sitzstruktur ist.

Durch die erfindungsgemäße Integration des zweiten Anschlags in die Randumstellung wird somit eine kostensenkende Funktionsintegration erreicht, die zudem als Maßnahme zur gezielten Beeinflussung der Struktursteifigkeit dient, beispielsweise indem im Crashfall in dem Bereich des zweiten Anschlags durch lokale Deformation gezielt Energie aufgenommen werden kann.

Vorteilhafte Ausgestaltungen, welche einzeln oder in Kombination miteinander eingesetzt werden können, sind Gegenstand der Unteransprüche.

Der erste Adapter ist vorzugsweise geometrisch einfach aufgebaut und dadurch kostengünstig gestaltet. Der erste Adapter umfasst dazu einen weitgehend senkrecht zur Schwenkachse der Lehne verlaufenden ersten Grundkörper, von dem der erste Anschlag in axialer Richtung absteht. Für eine weitere Funktionsintegration ist es vorteilhaft, wenn der erste Anschlag einstückig mit dem ersten Adapter ausgebildet ist, insbesondere rechtwinklig in axialer Richtung abgekantet oder umgebogen ist.

Eine bevorzugte Ausführungsform des ersten Adapters sieht vor, dass dieser aus einem Blechmaterial hergestellt ist und eine erste Anschlagfläche zum Zusammenwirken mit einer zweiten Anschlagfläche des zweiten Anschlags aufweist. Die die erste Anschlagfläche kann aus einer Schnittfläche des Blechmaterials gebildet sein. Wie jedes aus einem Blechmaterial hergestellte Bauteil umfasst auch ein aus Blech, beispielsweise Stahlblech, hergestellter Adapter einen flächigen Körper mit einer durch die Blechdicke vorgegebenen Dicke, die im Verhältnis zu den übrigen Abmessungen des Adapters gering ist. Entlang der äußeren Konturen und der inneren, durch Öffnungen erzeugten Konturen, verlaufen Schnittflächen, die vorzugsweise senkrecht zur Blechoberfläche orientiert sind und in dieser Richtung eine Tiefe aufweisen, die durch die Blechdicke weitgehend vorgegeben ist. Unter einer Schnittfläche sind somit die Bauteilflächen zu verstehen, die durch ein Trennen des Bleches im Herstellprozess entstehen. Es sind alle für ein Trennen von Blech geeigneten spanenden oder nicht spanenden Fertigungsverfahren geeignet, beispielsweise Stanzen, Feinschneiden, Wasserstrahlschneiden oder Erodieren.

Bei einer Verwendung von Blechen mit lokal unterschiedlicher Blechdicke, beispielsweise Tailored Blanks, haben die Schnittflächen entlang des Konturenverlaufs des Adapters entsprechend unterschiedliche Tiefen.

Der zweite Adapter umfasst vorteilhafterweise einen weitgehend senkrecht zur Schwenkachse verlaufenden flachen zweiten Grundkörper, dessen Außenkontur abschnittsweise von der Randumstellung gebildet ist. Die Randumstellung kann rechtwinklig zum Grundkörper sein, oder durch einen Biegeradius mit diesem verbunden sein.

Eine hohe Steifigkeit des zweiten Adapters wird erreicht, indem die Randumstellung in einer axialen Richtung, das heißt parallel zur Schwenkachse der Lehne, orientiert ist.

Der Anschlag ist in einer bevorzugten Ausführungsform als Schenkel einer dachförmigen Ausstellung aus der Randumstellung ausgeformt.

Die zweite Anschlagfläche liegt vorzugsweise auf der Blechoberfläche des Blechmaterials, also nicht auf einer Schnittfläche. Dadurch kann die Fläche der zweiten Anschlagfläche größer als eine Schnittfläche sein, deren Flächeninhalt in einer Richtung durch die Blechdicke des verwendeten Bleches begrenzt ist. Gegenüber den bekannten Lösungen aus dem Stand der Technik, bei denen zwei Schnittflächen zueinander gekreuzt als Anschlagflächen aufeinander treffen, kann somit die Kontaktfläche erhöht und die Flächenpressung im Kontaktbereich verringert werden. Zudem ermöglicht eine ausreichend große zweite Anschlagfläche einen Toleranzausgleich zwischen den Relativlagen der beiden Anschlagflächen.

Der zweite Anschlag lässt sich mit geringeren Toleranzen herstellen, wenn dieser zumindest teilweise von einem Freischnitt umgeben ist, das teilweise von einer Öffnung umgeben ist.

Der zweite Anschlag kann besonders steif ausgebildet sein, indem der zweite Anschlag in der Art einer Kofferecke ausgebildet ist. Eine erste Seite der Kofferecke kann der erste Schenkel sein. Eine zweite Seite der Kofferecke kann der zweite Schenkel sein. Eine dritte Seite der Kofferecke kann ein Grundkörper des zweiten Adapters sein.

Ein in beide Schwenkrichtungen begrenzter Schwenkwinkel der Lehne wird erreicht, indem der erste Adapter genau einen ersten Anschlag aufweist, der zweite Adapter genau zwei zweite Anschläge aufweist und der erste Anschlag in Umfangsrichtung, das heißt in einer äquidistant um die Schwenkachse umlaufenden Richtung, zwischen den beiden zweiten Anschlägen angeordnet ist.

Ein zur Verfügung stehender Bauraum im Bereich zwischen einem Polster der Lehne und einem Polster des Sitzteils lässt sich üblicherweise gut nutzen, indem der erste Adapter mit der Struktur der Lehne und der zweite Adapter mit der Struktur des Sitzteils verbunden ist. Es ist aber auch eine umgekehrte Anbindung der Anschläge möglich, bei der der zweite Adapter mit der Struktur der Lehne und der erste Adapter mit der Struktur des Sitzteils verbunden ist.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:

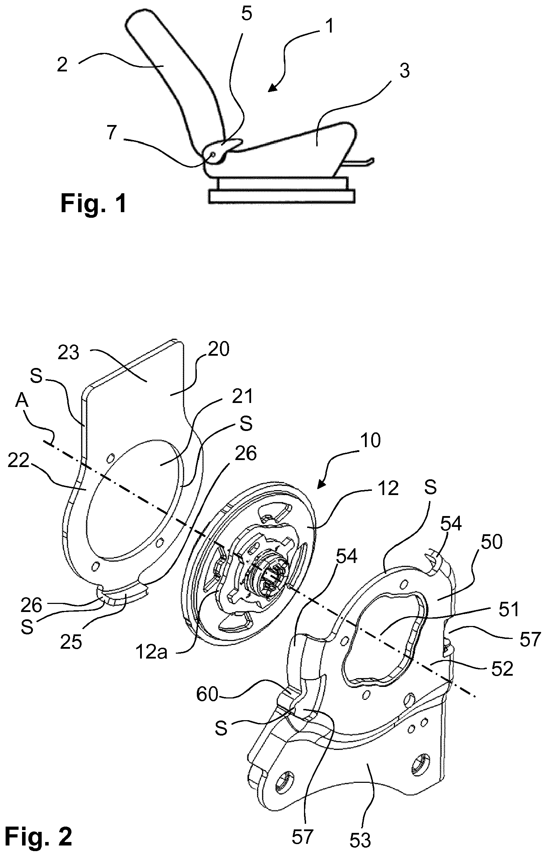

- Fig. 1:: eine schematische Darstellung des erfindungsgemäßen Fahrzeugsitzes,
- Fig. 2:: eine Explosionsdarstellung der Anordnung von Beschlag und beiden Adaptern des erfindungsgemäßen Fahrzeugsitzes,
- Fig. 3:: eine weitere Explosionsdarstellung aus einer gegenüber Fig. 2 entgegengesetzten Blickrichtung,
- Fig. 4:: eine Seitenansicht auf den Beschlag und die beiden Adapter des erfindungsgemäßen Fahrzeugsitzes in einer Zwischenstellung der Lehne,
- Fig. 5:: eine Fig. 4 entsprechende Ansicht in einer ersten Anschlagstellung der Lehne,
- Fig. 6:: eine Fig. 4 entsprechende Ansicht in einer zweiten Anschlagstellung der Lehne,

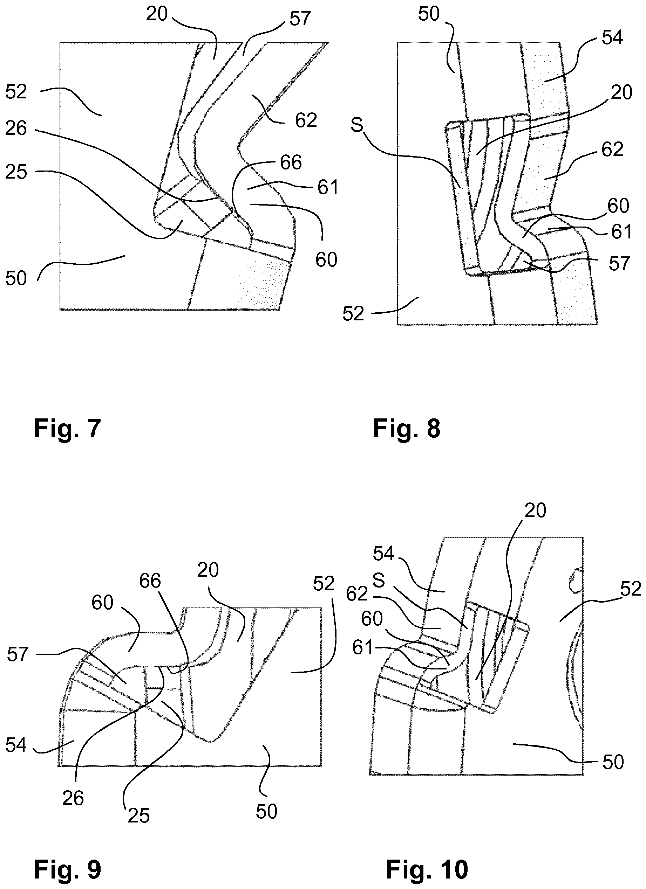

- Fig. 7:: eine Detailansicht auf den in Fig. 4 links dargestellten zweiten Anschlag aus einer gegenüber Fig. 4 entgegengesetzten Blickrichtung,
- Fig. 8:: eine weitere Detailansicht auf den in Fig. 4 links dargestellten zweiten Anschlag aus einer gegenüber Fig. 4 entgegengesetzten Blickrichtung,
- Fig. 9:: eine Detailansicht auf den in Fig. 4 rechts dargestellten zweiten Anschlag aus einer gegenüber Fig. 4 entgegengesetzten Blickrichtung und
- Fig. 10:: eine weitere Detailansicht auf den in Fig. 4 rechts dargestellten zweiten Anschlag aus einer gegenüber Fig. 4 entgegengesetzten Blickrichtung.

Ein Fahrzeugsitz 1 für ein Kraftfahrzeug weist ein Sitzteil 3 und eine relativ zum Sitzteil 3 neigungseinstellbare Lehne 2 auf. Die Lehne 2 umfasst eine Lehnenstruktur und ein die Lehnenstruktur abdeckendes Polster. Das Sitzteil 3 umfasst eine Sitzteilstruktur und ein die Sitzteilstruktur abdeckendes Polster.

Zur Neigungseinstellung der Lehne 2 wird manuell, beispielsweise mittels eines Bedienhebels 5, eine Übertragungsstange 7 gedreht, welche horizontal im Übergangsbereich zwischen Sitzteil 3 und Lehne 2 angeordnet ist. Auf beiden Seiten des Fahrzeugsitzes 1 greift die Übertragungsstange 7 in einen Beschlag 10 ein.

Der Beschlag 10 weist ein erstes Beschlagteil 11 und ein zweites Beschlagteil 12 auf, welche relativ zueinander verdrehbar und miteinander verriegelbar sind. Das erste Beschlagteil 11 ist mittels eines ersten Adapters 20 fest mit der Lehnenstruktur der Lehne 2 verbunden. Das zweite Beschlagteil 12 ist mittels eines zweiten Adapters 50 fest mit der Sitzteilstruktur des Sitzteils 3 verbunden, vorliegend mit dieser verschraubt. Die Zuordnungen der Beschlagteile 11 und 12 können jedoch auch vertauscht sein, d.h. das erste Beschlagteil 11 wäre dann mit der Sitzteilstruktur und das zweite Beschlagteil 12 mit der Lehnenstruktur verbunden.

Der Beschlag 10 ist als Rastbeschlag ausgebildet, bei welchem das erste Beschlagteil 11 und das zweite Beschlagteil 12 miteinander verriegelbar und nach dem Entriegeln relativ zueinander um eine Achse A verdrehbar sind, wie es beispielsweise in der WO 2012/072216 beschrieben ist. Die mit der Übertragungsstange 7 fluchtende Achse A definiert die verwendeten Richtungsangaben in einem Zylinderkoordinatensystem.

Die beiden Beschlagteile 11 und 12 lassen sich jeweils näherungsweise in eine kreisrunde Scheibenform einbeschreiben. Die beiden Beschlagteile 11 und 12, der erste Adapter 20 und der zweite Adapter 50 bestehen vorliegend aus Stahlblech. Es könnten jedoch auch andere Werkstoffe und Fertigungsverfahren, beispielsweise ein Druckguss-Verfahren, verwendet sein.

Vorliegend ist am ersten Beschlagteil 11 auf seiner vom zweiten Beschlagteil 12 abgewandten Stirnseite ein kreisförmiger Ringabsatz 11a ausgebildet, beispielsweise eine Materialausstellung des ersten Beschlagteils 11. Der Ringabsatz 11a greift formschlüssig durch eine kreisförmige erste Öffnung 21 im ersten Adapter 20, so dass der ersten Adapter 20 in dem radial außerhalb des Ringabsatzes 11a angeordneten Teil der Stirnseite des ersten Beschlagteils 11 in Anlage an das erste Beschlagteil 11 kommt. Entlang der Außenkante des Ringabsatzes 11a ist das erste Beschlagteil 11 insbesondere mit einer entlang der kreisförmigen ersten Öffnung 21 umlaufenden Schnittfläche S des ersten Adapters 20 verschweißt, insbesondere laserverschweißt. Unter den Schnittflächen S sind die durch die Blechdicke gebildeten Flächen in den Randbereichen des ersten Adapters 20 und des zweiten Adapters 50 zu verstehen, die weitgehend senkrecht zu den benachbarten Blechoberflächen verlaufen.

Am zweiten Beschlagteil 12 ist vorliegend auf seiner vom ersten Beschlagteil 11 abgewandten Stirnseite ein Sternabsatz 12a ausgebildet. Der Sternabsatz 12a weist eine mehrarmige, im Wesentlichen symmetrische Sternform auf, wie dies beispielsweise aus der DE 10 2009 041 491 A1 bekannt ist. Der Sternabsatz 12a greift formschlüssig in eine komplementär ausgebildete zweite Öffnung 51 des zweiten Adapters 50, so dass der zweite Adapter 50 in dem radial außerhalb des Sternabsatzes 12a angeordneten Teil der Stirnseite des zweiten Beschlagteils 12 in Anlage an das zweite Beschlagteil 12 kommt. Entlang der Außenkante des Sternabsatzes 12a ist das zweite Beschlagteil 12 mit dem zweiten Adapter 50 verschweißt, insbesondere laserverschweißt.

Der erste Adapter 20 umfasst einen weitgehend flach ausgebildeten, senkrecht zur Achse A orientierten und kreisrunden ersten Grundkörper 22, in den die erste Öffnung 21 eingebracht ist sowie einen ersten Flansch 23. Der erste Grundkörper 22 und der erste Flansch 23 sind einstückig miteinander ausgebildet und liegen vorliegend in einer Ebene.

Der erste Flansch 23 ist ein rechteckförmiger Bereich, der von dem ersten Grundkörper 22 aus in radialer Richtung zur Lehne 2 hin orientiert ist und der zur Anbindung des ersten Adapters 20 an die Struktur der Lehne 2 dient. Vorzugsweise ist der erste Flansch 23 mittels eines Metallschutzgasschweiß-Verfahrens mit der Struktur der Lehne 2 verschweißt.

Ein erster Anschlag 25 des ersten Adapters 20 steht in axialer Richtung von dem ersten Grundkörper 22 ab, vorliegend in Richtung der nächstgelegenen Sitzaußenseite des Fahrzeugsitzes 1. Der erste Anschlag 25 ist von einem äußeren Bereich des Grundkörpers 22, der dem ersten Flansch 23 annähernd gegenüberliegt, abgewinkelt. Der Übergangsbereich zwischen dem ersten Grundkörper 22 und dem erster Anschlag 25 ist vorliegend verrundet, kann in einer Abwandlung des Ausführungsbeispiels jedoch auch scharfkantig sein.

Der erste Anschlag 25 hat eine rechteckige, um die Achse A gewölbte Form. Zwei senkrecht zu einer Umfangsrichtung orientierte Schnittflächen S des ersten Anschlags 25 bilden jeweils eine erste Anschlagfläche 26. Die beiden ersten Anschlagflächen 26 stehen jeweils senkrecht zur flächigen Erstreckung des ersten Grundkörpers 22.

Der zweite Adapter 50 umfasst einen weitgehend flach ausgebildeten, senkrecht zur Achse A orientierten und annähernd kreisrunden zweiten Grundkörper 52, in den die zweite Öffnung 51 eingebracht ist sowie einen zweiten Flansch 53. Der zweite Grundkörper 52 und der zweite Flansch 53 sind einstückig miteinander ausgebildet und liegen leicht versetzt zueinander in parallelen Ebenen.

Der zweite Flansch 53 ist von dem zweiten Grundkörper 52 aus in radialer Richtung zum Sitzteil 3 hin orientiert und dient der Anbindung des zweiten Adapters 50 an die Struktur des Sitzteils 3, mit der der zweite Adapter 50 vorliegend verschraubt ist.

Eine Randumstellung 54 des zweiten Adapters 50 verläuft abschnittsweise entlang der äußeren Kontur des zweiten Grundkörpers 52 und des zweiten Flansches 53, vorliegend in Richtung der Sitzmitte. Die Randumstellung 54 erstreckt sich in axialer Richtung und somit senkrecht zum flächigen zweiten Grundkörper 52. In Richtung der Lehne 2 sowie in einem dem Grundkörper 52 abgewandten Bereich des zweiten Flansches 53 ist die Randumstellung 54 unterbrochen. Der Übergangsbereich zwischen dem zweiten Grundkörper 52 und der Randumstellung 54 ist vorliegend verrundet, kann in einer Abwandlung des Ausführungsbeispiels jedoch auch scharfkantig sein. Gleiches gilt für den Übergangsbereich zwischen dem zweiten Flansch 53 und der Randumstellung 54.

Die äußere Kontur des zweiten Grundkörpers 52 und damit die Randumstellung 54 verlaufen in zwei sich relativ zur Achse A gegenüberliegenden Abschnitten annähernd kreisbogenförmig mit einem Radius R um die Achse A. Aus jedem dieser beiden Abschnitte der Randumstellung 54 ist jeweils ein zweiter Anschlag 60 herausgestellt, der ausgehend von der Randumstellung 54 in Richtung der Achse A verläuft und jeweils einem Zusammenwirken mit dem ersten Anschlag 25 dienen. Die beiden zweiten Anschläge 60 sind von ihrem Aufbau und ihrer Funktion miteinander vergleichbar, so dass nachfolgend nur ein zweiter Anschlag 60 beschrieben ist.

Der zweite Anschlag 60 ist aus einem Teilbereich der Randumstellung 54 herausgestellt. Die Verrundung zwischen der Randumstellung 54 und dem zweiten Grundkörper 52 ist an dieser Stelle durch einen Freischnitt 57entfernt. Der Freischnitt 57 bildet somit eine Öffnung in dem verrundeten Übergangsbereich zwischen der Randumstellung 54 und dem zweiten Grundkörper 52, so dass die Randumstellung 54 entlang des Freischnitts 57 nicht unmittelbar mit dem zweiten Grundkörper 52 verbunden ist. Die Randumstellung 54 ist entlang des Freischnitts 57 in radialer Richtung in der Art zweier Schenkel 61, 62 eines Dreiecks nach innen gebogen. Ein erster Schenkel 61 ist in radialer Richtung zur Achse A hin orientiert und bildet den zweiten Anschlag 60. Der andere der beiden Schenkel 61, 62, ein zweiter Schenkel 62, stabilisiert den ersten Schenkel 61, das heißt den zweiten Anschlag 60. Der Übergangsbereich zwischen dem ersten Schenkel 61 und dem zweiten Schenkel 62 ist vorliegend verrundet, kann in einer Abwandlung des Ausführungsbeispiels jedoch auch scharfkantig sein.

Eine senkrecht zur Umfangsrichtung orientierte zweite Anschlagfläche 66 des zweiten Anschlags 60 steht senkrecht zu den benachbarten Schnittflächen S, die die Breite des zweiten Anschlags 60 begrenzen. Die zweite Anschlagfläche 66 liegt somit auf der Blechoberfläche. Die zweite Anschlagfläche 66 steht senkrecht zur flächigen Erstreckung des zweiten Grundkörpers 52.

Der erste Anschlag 25 ist - in Umfangsrichtung um die Achse A betrachtet - zwischen den beiden zweiten Anschlägen 60 angeordnet. Jede der beiden ersten Anschlagflächen 26 des ersten Anschlags 25 ist in Richtung einer der beiden zweiten Anschlagflächen 66 des zweiten Anschlags 60 hin orientiert. Der Abstand der ersten Anschlagflächen 26 von der Achse A in radialer Richtung und der Abstand der zweiten Anschlagflächen 66 von der Achse A in radialer Richtung ist ähnlich, jedoch überlappen sich die einander zugeordneten ersten und zweiten Anschlagflächen 26, 66 in radialer Richtung, so dass diese beim Schwenken der Lehne 2 nach einem gewissen Schwenkwinkel aneinander anliegen und dadurch den Schwenkwinkel der Lehne 2 in beide Schwenkrichtungen auf die nachfolgend näher beschriebene Weise begrenzen.

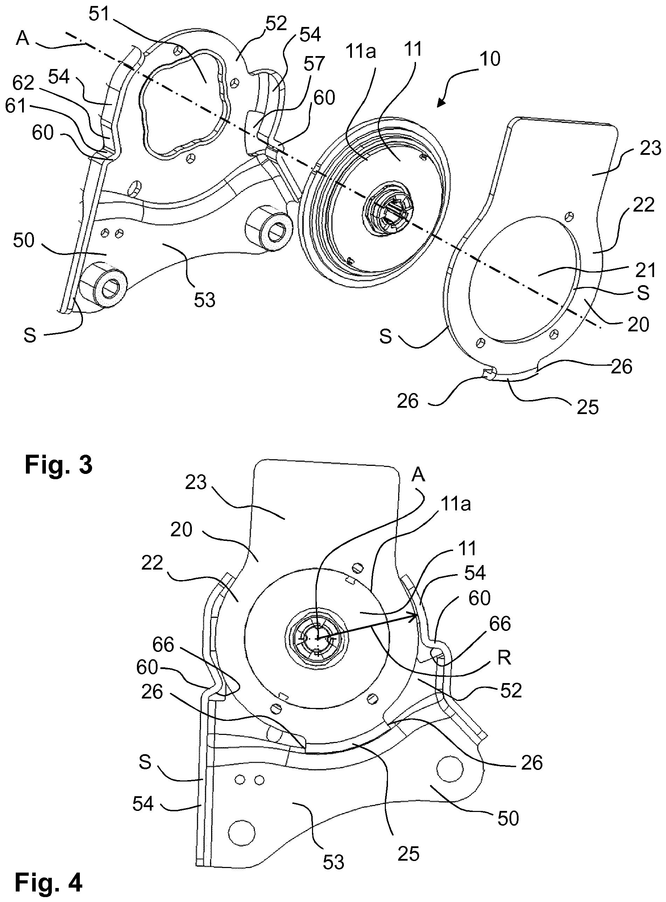

In Figur 4 ist eine Zwischenstellung der Lehne 2 dargestellt. Die Winkelstellung des ersten Flansches 23 entspricht der Winkelstellung der Lehne 2. Der erste Anschlag 25 ist in Umfangsrichtung zu beiden zweiten Anschlägen 60 beabstandet, so dass keine der beiden ersten Anschlagflächen 26 in Kontakt mit einer zweiten Anschlagflächen 66 steht.

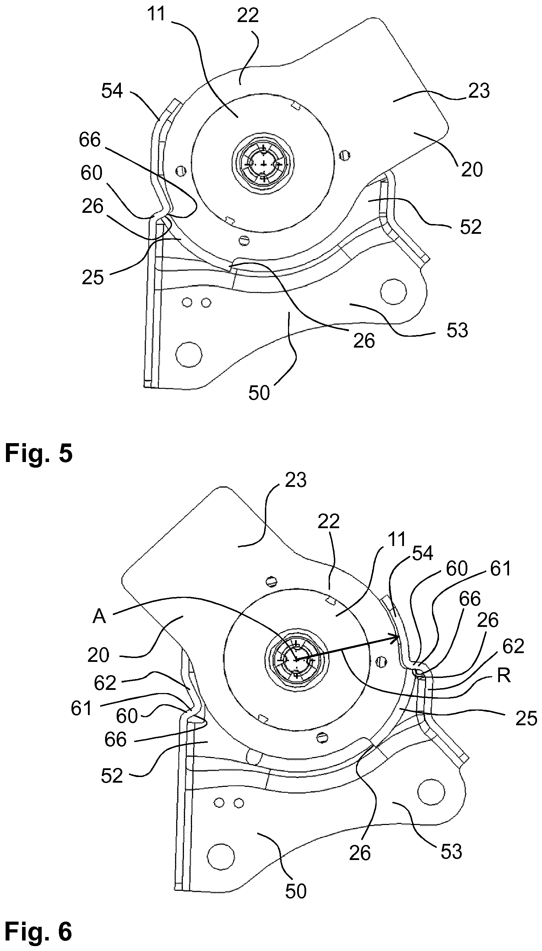

Die Figuren 5 und 6 zeigen jeweils eine der beiden Anschlagstellungen. In jeder der beiden Anschlagstellungen ist eine der beiden ersten Anschlagflächen 26 in Kontakt mit einer der beiden zweiten Anschlagflächen 66, so dass die Lehne 2 in der jeweiligen Richtung nicht weiter geschwenkt werden kann.

In einer ersten Abwandlung des Ausführungsbeispiels ist der erste Adapter in die Lehnenstruktur der Lehne und/oder der zweite Adapter in die Sitzteilstruktur des Sitzteils integriert.

In einer zweiten Abwandlung des Ausführungsbeispiels ist der erste Adapter in das erste Beschlagteil und/oder der zweite Adapter in das zweite Beschlagteil integriert.

In einer dritten Abwandlung des Ausführungsbeispiels ist der zweite Anschlag in einem Bereich des zweiten Adapters, der keinen Freischnitt aufweist, aus der Randumstellung herausgestellt. Die Erfindung ist ausdrücklich nicht auf Ausführungsbeispiele mit Freischnitt beschränkt. Beispielsweise können die zweiten Anschläge dann in der Art einer Kofferecke ausgebildet sein oder der den zweiten Anschlag bildende Schenkel läuft kontinuierlich in den zweiten Grundkörper.

In einer weiteren Abwandlung des Ausführungsbeispiels ist der Beschlag als ein Getriebebeschlag ausgebildet, wie dieser beispielsweise aus der DE 10 2011 012 076 A1 bekannt ist.

### Bezugszeichenliste

- 1: Fahrzeugsitz
- 2: Lehne
- 3: Sitzteil
- 5: Bedienhebel
- 7: Übertragungsstange
- 10: Beschlag
- 11: erstes Beschlagteil
- 11a: Ringabsatz
- 12: zweites Beschlagteil
- 12a: Sternabsatz
- 20: erster Adapter
- 21: erste Öffnung
- 22: erster Grundkörper
- 23: erster Flansch
- 25: erster Anschlag
- 26: erste Anschlagfläche
- 50: zweiter Adapter
- 51: zweite Öffnung
- 52: zweiter Grundkörper
- 53: zweiter Flansch
- 54: Randumstellung
- 57: Freischnitt
- 60: zweiter Anschlag
- 61: erster Schenkel
- 62: zweiter Schenkel
- 66: zweite Anschlagfläche
- A: Achse
- R: Radius
- S: Schnittfläche

## Patentansprüche

1. Fahrzeugsitz (1), insbesondere Kraftfahrzeugsitz, mit
a) einem Sitzteil (3) und einer Lehne (2), welche mittels wenigstens eines Beschlags (10), welcher ein erstes Beschlagteil (11) und ein relativ zu dem ersten Beschlagteil (11) um eine Achse (A) drehbares zweites Beschlagteil (12) umfasst, mit dem Sitzteil (3) verbunden und relativ zu dem Sitzteil (3) um die Achse (A) schwenkbar ist,
b) einem ersten Adapter (20), der das erste Beschlagteil (11) fest mit einer Struktur der Lehne (2) oder einer Struktur des Sitzteils (3) verbindet,
c) einem zweiten Adapter (50), der das zweite Beschlagteil (12) fest mit der anderen der beiden Strukturen des Sitzteils (3) und der Lehne (2) verbindet,
d) wenigstens einem ersten Anschlag (25) an dem ersten Adapter (20) und wenigstens einem zweiten Anschlag (60) an dem zweiten Adapter (50), wobei der erste Anschlag (25) durch Zusammenwirken mit dem zweiten Anschlag (60) den Schwenkwinkel der Lehne (2) beschränkt, und der zweite Anschlag (60) einstückig mit dem zweiten Adapter (50) ausgebildet ist und der zweite Anschlag (60) aus einer Randumstellung (54) des zweiten Adapters (50) herausgestellt ist, wobei der zweite Anschlag (60) einen ersten Schenkel (61) aufweist, der ausgehend von der Randumstellung (54) in radialer Richtung zur Achse (A) hin orientiert verläuft, **dadurch gekennzeichnet, dass** der zweite Anschlag (60) einen zweiten Schenkel (62) aufweist, der den ersten Schenkel (61) stabilisiert.

2. Fahrzeugsitz (1) nach Anspruch 1, **dadurch gekennzeichnet, dass** der erste Anschlag (25) eine erste Anschlagfläche (26) aufweist, der zweite Anschlag (60) eine zweite Anschlagfläche (66) aufweist und beim Schwenken der Lehne (2), nach einem Durchlaufen eines Schwenkwinkels, die erste Anschlagfläche (26) an der zweite Anschlagfläche (66) anliegt und dadurch den Schwenkwinkel der Lehne (2) beschränkt.

3. Fahrzeugsitz (1) nach Anspruch 1 oder 2, **dadurch gekennzeichnet, dass** der erste Adapter (20) einen flachen, weitgehend senkrecht zur Achse (A) verlaufenden ersten Grundkörper (22) aufweist, von dem der erste Anschlag (25) in axialer Richtung absteht.

4. Fahrzeugsitz (1) nach einem der Ansprüche 1 bis 3, **dadurch gekennzeichnet, dass** der erste Anschlag (25) einstückig mit dem ersten Adapter (20) ausgebildet ist.

5. Fahrzeugsitz (1) nach einem der Ansprüche 2 bis 4, **dadurch gekennzeichnet, dass** der erste Adapter (20) aus einem Blechmaterial hergestellt ist, und die erste Anschlagfläche (26) aus einer Schnittfläche (S) des Blechmaterials gebildet ist.

6. Fahrzeugsitz (1) nach einem der Ansprüche 1 bis 5, **dadurch gekennzeichnet, dass** der zweite Adapter (50) einen weitgehend senkrecht zur Achse (A) verlaufenden zweiten Grundkörper (52) aufweist, dessen Außenkontur abschnittsweise von der Randumstellung (54) gebildet ist.

7. Fahrzeugsitz (1) nach einem der Ansprüche 1 bis 6, **dadurch gekennzeichnet, dass** die Randumstellung (54) in einer axialen Richtung, parallel zur Achse (A), orientiert ist.

8. Fahrzeugsitz (1) nach einem der Ansprüche 1 bis 7, **dadurch gekennzeichnet, dass** der erste Schenkel (61) und der zweite Schenkel (62) in der Art zweier Schenkel eines Dreiecks ausgebildet sind.

9. Fahrzeugsitz (1) nach einem der Ansprüche 2 bis 8, **dadurch gekennzeichnet, dass** der zweite Adapter (50) aus einem Blechmaterial hergestellt ist und ein Teil einer Blechoberfläche des Blechmaterials die zweite Anschlagfläche (66) bildet.

10. Fahrzeugsitz (1) nach Anspruch 9, **dadurch gekennzeichnet, dass** der zweite Adapter (50) zwei Blechoberflächen aufweist, die im Abstand einer Blechdicke zueinander beabstandet sind.

11. Fahrzeugsitz (1) nach Anspruch 9 oder 10, **dadurch gekennzeichnet, dass** der zweite Anschlag (60) zumindest teilweise von einem Freischnitt (57) umgeben ist.

12. Fahrzeugsitz (1) nach Anspruch 9 oder 10, **dadurch gekennzeichnet, dass** der zweite Anschlag (60) in der Art einer Kofferecke ausgebildet ist.

13. Fahrzeugsitz (1) nach einem der Ansprüche 9 bis 12, **dadurch gekennzeichnet, dass** die zweite Anschlagfläche (66) in axialer Richtung durch mindestens eine Schnittfläche begrenzt ist.

14. Fahrzeugsitz (1) nach einem der Ansprüche 1 bis 13, **dadurch gekennzeichnet, dass** der erste Adapter (20) genau einen ersten Anschlag (25) aufweist, der zweite Adapter (50) genau zwei zweite Anschläge (60) aufweist, und der erste Anschlag (25) in Umfangsrichtung um die Achse (A) zwischen den beiden zweiten Anschlägen (60) angeordnet ist und den Schwenkwinkel der Lehne (2) in beide Schwenkrichtungen beschränkt.

## Claims

1. Vehicle seat (1), in particular a motor vehicle seat, having
a) a seat part (3) and a backrest (2) which is connected to the seat part (3) by means of at least one fitting (10) which comprises a first fitting part (11) and a second fitting part (12) that is rotatable about an axis (A) relative to the first fitting part (11), said backrest (2) also being pivotable about the axis (A) relative to the seat part (3),
b) a first adapter (20) which connects the first fitting part (11) firmly to a structure of the backrest (2) or to a structure of the seat part (3),
c) a second adapter (50) which connects the second fitting part (12) firmly to the other of the two structures of the seat part (3) and of the backrest (2),
d) at least one first stop (25) on the first adapter (20) and at least one second stop (60) on the second adapter (50), wherein the first stop (25) limits the pivot angle of the backrest (2) by interacting with the second stop (60), and the second stop (60) is formed in one piece with the second adapter (50), and the second stop (60) protrudes from a peripheral lip (54) of the second adapter (50), wherein the second stop (60) has a first leg (61) which extends in a manner oriented toward the axis (A) in the radial direction starting from the peripheral lip (54),
**characterized in that** the second stop (60) has a second leg (62) which stabilizes the first leg (61).

2. Vehicle seat (1) according to Claim 1, **characterized in that** the first stop (25) has a first stop surface (26), the second stop (60) has a second stop surface (66), and when the backrest (2) is pivoted, after passing through a pivot angle, the first stop surface (26) bears against the second stop surface (66) and as a result limits the pivot angle of the backrest (2).

3. Vehicle seat (1) according to Claim 1 or 2, **characterized in that** the first adapter (20) has a flat first main body (22) extending largely perpendicularly to the axis (A), the first stop (25) protruding from said first main body (22) in the axial direction.

4. Vehicle seat (1) according to one of Claims 1 to 3, **characterized in that** the first stop (25) is formed in one piece with the first adapter (20).

5. Vehicle seat (1) according to one of Claims 2 to 4, **characterized in that** the first adapter (20) is produced from a sheet metal material and the first stop surface (26) is formed from a cut surface (S) of the sheet metal material.

6. Vehicle seat (1) according to one of Claims 1 to 5, **characterized in that** the second adapter (50) has a second main body (52) that extends largely perpendicularly to the axis (A), the external contour of said second main body (52) being formed sectionally by the peripheral lip (54).

7. Vehicle seat (1) according to one of Claims 1 to 6, **characterized in that** the peripheral lip (54) is oriented in an axial direction, parallel to the axis (A).

8. Vehicle seat (1) according to one of Claims 1 to 7, **characterized in that** the first leg (61) and the second leg (62) are formed in the manner of two legs of a triangle.

9. Vehicle seat (1) according to one of Claims 2 to 8, **characterized in that** the second adapter (50) is produced from a sheet metal material and a part of a sheet metal surface of the sheet metal material forms the second stop surface (66).

10. Vehicle seat (1) according to Claim 9, **characterized in that** the second adapter (50) has two sheet metal surfaces which are spaced apart from one another at the spacing of a sheet metal thickness.

11. Vehicle seat (1) according to Claim 9 or 10, **characterized in that** the second stop (60) is surrounded at least partially by a cutout (57).

12. Vehicle seat (1) according to Claim 9 or 10, **characterized in that** the second stop (60) is formed in the manner of a corner blend.

13. Vehicle seat (1) according to one of Claims 9 to 12, **characterized in that** the second stop surface (66) is bounded by at least one cut surface in the axial direction.

14. Vehicle seat (1) according to one of Claims 1 to 13, **characterized in that** the first adapter (20) has precisely one first stop (25), the second adapter (50) has precisely two second stops (60), and the first stop (25) is arranged between the two second stops (60) in the circumferential direction around the axis (A) and limits the pivot angle of the backrest (2) in both pivoting directions.

## Revendications

1. Siège de véhicule (1), notamment siège de véhicule automobile, doté
a) d'une assise (3) et d'un dossier (2), lequel est relié à l'assise (3) au moyen d'au moins une ferrure (10) (laquelle comprend une première pièce de ferrure (11) et une deuxième pièce de ferrure (12) pouvant tourner autour d'un axe (A) par rapport à la première pièce de ferrure (11)) et peut pivoter autour de l'axe (A) par rapport à l'assise (3),
b) d'un premier adaptateur (20), lequel relie la première pièce de ferrure (11) de manière fixe à une structure du dossier (2) ou à une structure de l'assise (3),
c) d'un deuxième adaptateur (50), lequel relie la deuxième pièce de ferrure (12) de manière fixe à l'autre structure parmi les deux structures de l'assise (3) et du dossier (2),
d) d'au moins une première butée (25) sur le premier adaptateur (20) et d'au moins une deuxième butée (60) sur le deuxième adaptateur (50), dans lequel la première butée (25) restreint l'angle de pivot du dossier (2) par coopération avec la deuxième butée (60), et la deuxième butée (60) est réalisée d'une pièce avec le deuxième adaptateur (50) et la deuxième butée (60) est établie à partir d'un changement de bord (54) du deuxième adaptateur (50), dans lequel la deuxième butée (60) comporte un premier côté (61), lequel s'étend à partir du changement de bord (54) dans la direction radiale par rapport l'axe (A),
**caractérisé en ce que** la deuxième butée (60) comporte un deuxième côté (62), lequel stabilise le premier côté (61).

2. Siège de véhicule (1) d'après la revendication 1, **caractérisé en ce que** la première butée (25) comporte une première surface de butée (26), la deuxième butée (60) comporte une deuxième surface de butée (66) et, lors du pivotement du dossier (2), après avoir passé un angle de pivot, la première surface de butée (26) repose sur la deuxième surface de butée (66) et restreint ainsi l'angle de pivot du dossier (2).

3. Siège de véhicule (1) d'après la revendication 1 ou 2, **caractérisé en ce que** le premier adaptateur (20) comporte un premier corps de base (22) plat, essentiellement perpendiculaire à l'axe (A), duquel la première butée (25) dépasse dans la direction axiale.

4. Siège de véhicule (1) d'après l'une des revendications 1 à 3, **caractérisé en ce que** la première butée (25) est réalisée d'une pièce avec le premier adaptateur (20).

5. Siège de véhicule (1) d'après l'une des revendications 2 à 4, **caractérisé en ce que** le premier adaptateur (20) est fabriqué en tôle, et la première surface de butée (26) est formée à partir d'une surface de coupe (S) de la tôle.

6. Siège de véhicule (1) d'après l'une des revendications 1 à 5, **caractérisé en ce que** le deuxième adaptateur (50) comporte un deuxième corps de base (52) essentiellement perpendiculaire à l'axe (A), dont le contour extérieur est formé en partie par le changement de bord (54).

7. Siège de véhicule (1) d'après l'une des revendications 1 à 6, **caractérisé en ce que** le changement de bord (54) est orienté dans une direction axiale parallèle à l'axe (A).

8. Siège de véhicule (1) d'après l'une des revendications 1 à 7, **caractérisé en ce que** le premier côté (61) et le deuxième côté (62) sont réalisés à la manière de deux côtés d'un triangle.

9. Siège de véhicule (1) d'après l'une des revendications 2 à 8, **caractérisé en ce que** le deuxième adaptateur (50) est fabriqué en tôle et forme une partie d'une surface de tôle de la tôle de la deuxième surface de butée (66).

10. Siège de véhicule (1) d'après la revendication 9, **caractérisé en ce que** le deuxième adaptateur (50) comporte deux surfaces de tôle, lesquelles sont écartées l'une de l'autre de la distance d'une épaisseur de tôle.

11. Siège de véhicule (1) selon la revendication 9 ou 10, **caractérisé en ce que** la deuxième butée (60) est entourée au moins partiellement par une découpe (57).

12. Siège de véhicule (1) selon la revendication 9 ou 10, **caractérisé en ce que** la deuxième butée (60) est réalisée à la manière d'un coin de valise.

13. Siège de véhicule (1) selon l'une des revendications 9 à 12, **caractérisé en ce que** la deuxième surface de butée (66) est délimitée par au moins une surface de coupe dans la direction axiale.

14. Siège de véhicule (1) selon l'une des revendications 1 à 13, **caractérisé en ce que** le premier adaptateur (20) comporte exactement une première butée (25), le deuxième adaptateur (50) comporte exactement deux deuxièmes butées (60), et la première butée (25) est agencée entre les deux deuxièmes butées (60) dans la direction circonférentielle autour de l'axe (A) et restreint l'angle de pivot du dossier (2) dans les deux directions de pivot.
